# EUROPÄISCHE PATENTANMELDUNG

(11) **EP 2 848 836 A2**
(43) Veröffentlichungstag der Anmeldung: **18.03.2015**
(21) Anmeldenummer: 14181687.6
(22) Anmeldetag: 20.08.2014
(51) Int. Cl.: F16D 65/14, B60T 13/74

(54) **Spindel**

(30) Priorität: 14.09.2013 DE 202013008175 U
(71) Anmelder: RT Holdings III WG (US) LP, SCS, 1513 Luxemburg (LU)
(72) Erfinder: Hillebrands, Peter, 41564 Kaarst (DE)
(74) Vertreter: Weickmann & Weickmann

(57) **Zusammenfassung**

Spindel (10), beispielsweise für eine elektronische Parkbremse, zur Verschraubung mit einer Druckmutter mit einem Nocken, mit einem Kraftangriff (12) an einem Ende, einem gegenüber dem Kraftangriff (12) angeordneten Schaft (14) mit einer Rotationsachse (16) und mit einem Außengewinde (18) zur Aufschrauben der Druckmutter und einem dazwischen angeordneten Teller (20) mit Anschlagnocken (22, 24) für den Nocken der Druckmutter, wobei das Außengewinde (18) zweigängig ausgebildet ist und auf der schaftseitigen Stirnfläche des Tellers (20) zwei gegeneinander um 180° versetzte Anschlagnocken (22, 24) angebracht sind.

## Beschreibung

### Technisches Gebiet

Die vorliegende Erfindung betrifft eine Spindel, beispielsweise für eine elektronische Parkbremse, zur Verschraubung mit einer Druckmutter mit einem Nocken, mit einem Kraftangriff an einem Ende, einen gegenüber dem Kraftangriff angeordneten Schaft mit einer Rotationsachse und mit einem Außengewinde und einem dazwischen angeordneten Teller mit Anschlagnocken für den Nocken der Druckmutter.

### Stand der Technik

Solche Spindeln finden beispielsweise bei elektronischen Parkbremsen Verwendung. Bisher wurden dabei eingängige Gewinde auf dem Schaft, ein Nocken an der Druckmutter und ein Anschlagnocken an dem Teller verwendet.

Nunmehr sollen zweigängige Gewinde als Außengewinde auf dem Schaft der Spindel angeordnet werden. Dies führt aber zu der Gefahr, dass eine fehlerhafte Montage sowohl bei der Fertigung, als auch später bei Reparaturarbeiten in der Werkstatt auftreten könnte.

Aufgabe der vorliegenden Erfindung ist es daher, eine Möglichkeit zu eröffnen, sowohl ein zweigängiges Gewinde als Außengewinde verwenden zu können, und trotzdem sicherzustellen, dass der Nocken der Druckmutter immer und unabhängig von einer lagerichtigen

Verschraubung auf einen passenden Anschlagnocken am Teller trifft.

### Darstellung der Erfindung

Erfindungsgemäß wird diese Aufgabe dadurch gelöst, dass das Außengewinde zweigängig ausgebildet ist und an dem Teller zwei gegeneinander um 180° versetzte Anschlagnocken angebracht sind.

Besonders bevorzugt ist es dabei, wenn die Anschlagnocken rotationssymmetrisch um die Rotationsachse des Schafts auf dem Teller angeordnet sind.

Ein optimales Zusammentreffen zwischen der Nocke der Druckmutter und der jeweiligen Anschlagnocke auf dem Teller der Spindel wird dadurch erzielt, dass die Anschlagnocken ausgehend von dem Schaft als rechteckige Streifen ausgebildet sind, deren in Anzugsdrehrichtung des Außengewindes des Schaftes zeigende erste Kante radial von der Rotationsachse des Schaftes weg verläuft, während die gegenüberliegende zweite Kante parallel zur ersten Kante und tangential vom äußeren Umfang des Schaftes weg verläuft.

### Kurze Beschreibung der Zeichnungen

Die vorliegende Erfindung wird im Folgenden anhand des in den Zeichnungen dargestellten Ausführungsbeispieles näher erläutert. Es zeigt:
Fig. 1 Eine erfindungsgemäße Spindel, im Bereich des Kraftangriffes teilweise geschnitten, von der Seite;
Fig. 2 den Teller einer erfindungsgemäßen Spindel von der Schaftseite her gesehen; und
Fig. 3 eine Detaildarstellung von Kraftangriff und Teller der erfindungsgemäßen Spindel von der Seite.

### Bester Weg zur Ausführung der Erfindung

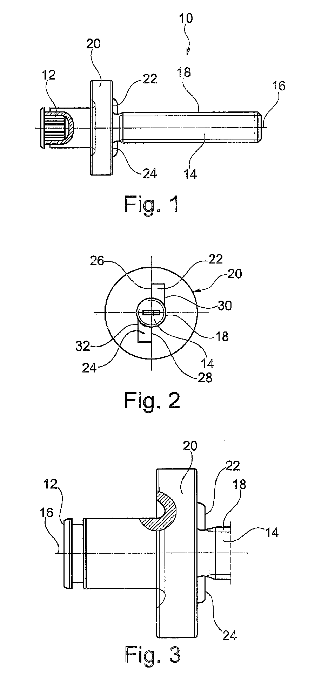

Fig. 1 zeigt eine erfindungsgemäße Spindel 10, wie sie beispielsweise für eine elektronische Parkbremse Verwendung findet, von der Seite. Solche Spindeln dienen der Verschraubung mit einer Druckmutter mit einem Nocken, an dem dann ein Anschlagnocken der Spindel anschlagen soll.

Zu diesem Zwecke weisen die erfindungsgemäßen Spindeln 10 einen Kraftangriff 12 an einem Ende und einen gegenüber dem Kraftangriff 12 angeordneten Schaft 14 mit einer Rotationsachse 16 und einem Außengewinde 18 auf. Zwischen dem Kraftangriff 12 und dem Schaft 14 ist ein rotationssymmetrisch zu dem Schaft 14 und dem Kraftangriff 12 angeordneter scheibenförmiger Teller 20 vorgesehen. Dieser Teller 20 trägt auf seiner dem Schaft 14 zugewandten Stirnfläche zwei Anschlagnocken 22, 24, die Anschläge für den Nocken der Druckmutter bilden.

Erfindungsgemäß kann hier das Außengewinde 18 erstmals ohne die Gefahr einer Falschmontage, die zum Verklemmen der Druckmutter auf der Spindel führen würde, zweigängig ausgebildet sein.

Wie in Fig. 2 dargestellt, sind die an dem Teller 20 angebrachten Anschlagnocken 22, 24 gegeneinander um 180° versetzt. Somit kann unabhängig von der Montagelage beim Einschrauben des zweigängigen Außengewindes 18 in die Druckmutter sichergestellt werden, dass immer ein richtig gelagerter Anschlagnocken für den Nocken der Druckmutter bereitgestellt ist.

Diesbezüglich ist es besonders bevorzugt, wenn die Anschlagnocken 22, 24 wie hier in Fig. 2 dargestellt, rotationssymmetrisch um die Rotationsachse 16 des Schaftes 14 auf der schaftseitigen Stirnfläche des Tellers 20 angeordnet sind.

Wie in Fig. 2 dargestellt, sind bei der hier vorliegenden Ausführungsform der vorliegenden Erfindung die Anschlagnocken 22, 24 ausgehend von dem Schaft 14 als rechteckige Streifen ausgebildet, deren in Anzugsdrehrichtung des Außengewindes 18 des Schaftes 14 zeigende erste Kanten 26, 28 radial von der Rotationsachse 16 des Schaftes 14 weg verlaufen, während die gegenüberliegenden zweiten Kanten 30, 32 parallel zu den ersten Kanten 26, 28 und tangential vom äußeren Umfang des Schaftes 14 weg verlaufen.

Die bisherigen Spindeln dieser Art haben stets nur eine Anschlagnocke und ein eingängiges Gewinde aufgewiesen.

Erfindungsgemäß wird erstmals die Möglichkeit geschaffen, zweigängige Gewinde für die Spindel zu verwenden, ohne dass die Gefahr einer nicht lagerichtigen Montage und damit eines Versagens der entsprechenden elektronischen Parkbremse besteht. Werden nämlich die Spindeln gemäß dem Stand der Technik mit nur einer Nocke, aber mit einem zweigängigen Außengewinde versehen, so verklemmt sich das Bauteil, wenn die Verschraubung nicht in der richtigen Ansatzposition erfolgt. Das Bauteil verklemmt sich sodann und dieses kann zum Versagen der Bremse führen, wenn der Anschlagnocken der Spindel nicht an dem Nocken der Druckmutter anschlagen kann, weil die Verbaulage falsch ist.

Erfindungsgemäß kann eine solche fehlerhafte Montage sowohl im Werk als auch in der Werkstatt mit Sicherheit ausgeschlossen werden, da erfindungsgemäß die Montage in jeder beliebigen Einbaulage durchgeführt werden kann.

Somit löst die vorliegende Erfindung ein Montageproblem nicht nur in der Industrie, sondern auch später in den Werkstätten.

## Patentansprüche

1. Spindel (10), beispielsweise für eine elektronische Parkbremse, zur Verschraubung mit einer Druckmutter mit einem Nocken, mit einem Kraftangriff (12) an einem Ende, einem gegenüber dem Kraftangriff (12) angeordneten Schaft (14) mit einer Rotationsachse (16) und mit einem Außengewinde (18) zur Aufschrauben der Druckmutter und einem dazwischen angeordneten Teller (20) mit Anschlagnocken (22, 24) für den Nocken der Druckmutter,
**dadurch gekennzeichnet, dass**
das Außengewinde (18) zweigängig ausgebildet ist und auf der schaftseitigen Stirnfläche des Tellers (20) zwei gegeneinander um 180° versetzte Anschlagnocken (22, 24) angebracht sind.

2. Spindel nach Anspruch 1,
**dadurch gekennzeichnet, dass**
die Anschlagnocken (22, 24) rotationssymmetrisch um die Rotationsachse (16) des Schafts (14) auf dem Teller (20) angeordnet sind.

3. Spindel nach Anspruch 1 oder 2,
**dadurch gekennzeichnet, dass**
die Anschlagnocken (22, 24) ausgehend von dem Schaft (14) als rechteckige Streifen ausgebildet sind, deren in Anzugsdrehrichtung des Außengewindes (18) des Schaftes (14) zeigende erste Kanten (26, 28) radial von der Rotationsachse (16) des Schaftes weg verlaufen, während die gegenüberliegenden zweiten Kanten (30, 32) parallel zu den ersten Kanten (26, 28) und tangential vom äußeren Umfang des Schaftes (14) weg verlaufen.
